# EUROPEAN PATENT APPLICATION

(11) **EP 4 510 772 A1**
(43) Date of publication of application: **19.02.2025**
(21) Application number: 22936832.9
(22) Date of filing: 12.04.2022
(51) Int. Cl.: H04W 88/04, H04W 12/04

(54) **INFORMATION PROCESSING METHODS, APPARATUS, COMMUNICATION DEVICE AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/086445
(87) International publication number: WO 2023/197178

(57) **Abstract**

Provided in the embodiments of the present disclosure are information processing methods, an apparatus, a communication device, and a storage medium. One information processing method executed by a first network element may comprise: receiving a first request message sent by a user equipment (UE), the first request message being used for requesting an intermediate key from the first network element, the intermediate key being used for determining a relay discovery key, and the relay discovery key being used for security protection for mutual discovery between a relay UE and a remote UE.

## Description

### TECHNICAL FIELD

The present disclosure relates to, but is not limited to, the field of wireless communication technologies, and in particular to a method and apparatus for processing information, a communication device and a storage medium.

### BACKGROUND

A remote User Equipment (UE) can be connected to a mobile communication network through a PC5 communication with a UE-to-Network (U2N) relay.

However, before the PC5 communication is established between the remote UE and the U2N relay, mutual discovery is required.

However, there are no clear and/or detailed specifications regarding security procedures for the mutual discovery between the remote UE and the U2N relay in the 5G network.

### SUMMARY

Embodiments of the present disclosure provide a method and apparatus for processing information, a communication device, and a storage medium.

A first aspect of embodiments of the present disclosure provides a method for processing information, which is performed by a first network element, and the method includes:
receiving a first request message sent by a User Equipment (UE);
wherein the first request message is configured to request an intermediate key from the first network element, the intermediate key is configured to determine a relay discovery key, and the relay discovery key is configured for security protection of mutual discovery between a UE-to-Network (U2N) relay and a remote UE.

A second aspect of embodiments of the present disclosure provides a method for processing information, which is performed by a remote UE, and the method includes:
sending a first request message to a first network element, wherein the first request message is configured to request an intermediate key from the first network element, the intermediate key is configured to determine a relay discovery key, and the relay discovery key is configured for security protection of mutual discovery between a UE-to-Network (U2N) relay and the remote UE.

A third aspect of embodiments of the present disclosure provides a method for processing information, which is performed by a UE-to-Network (U2N) relay, and the method includes:
sending a first request message to a first network element, wherein the first request message is configured to request an intermediate key from the first network element, the relay intermediate key is configured to determine a relay discovery key, and the relay discovery key is configured for security protection of mutual discovery between the U2N relay and a remote UE.

A fourth aspect of embodiments of the present disclosure provides a method for processing information, which is performed by a Proximity-based Service (ProSe), and the method includes:
receiving a second request message sent by a first network element;
determining, according to the first request message, whether a potential UE-to-Network (U2N) relay is available for providing a required relay service for a remote UE, and obtaining a determination result; and
returning a second response message to the first network element according to the determination result.

A fifth aspect of embodiments of the present disclosure provides an apparatus for processing information, including:
a first receiving module, configured to receive a first request message sent by a User Equipment (UE);
wherein the first request message is configured to request an intermediate key from the first network element, the intermediate key is configured to determine a relay discovery key, and the relay discovery key is configured for security protection of mutual discovery between a UE-to-Network (U2N) relay and a remote UE.

A sixth aspect of embodiments of the present disclosure provides an apparatus for processing information, including:
a second sending module, configured to send a first request message to a first network element, wherein the first request message is configured to request an intermediate key from the first network element, the intermediate key is configured to determine a relay discovery key, and the relay discovery key is configured for security protection of mutual discovery between a UE-to-Network (U2N) relay and the remote UE.

A seventh aspect of embodiments of the present disclosure provides an apparatus for processing information, wherein the device includes:
a third sending module, configured to send a first request message to a first network element, wherein the first request message is configured to request an intermediate key from the first network element, the intermediate key is configured to determine a relay discovery key, and the relay discovery key is configured for security protection of mutual discovery between the U2N relay and a remote UE.

An eighth aspect of embodiments of the present disclosure provides an apparatus for processing information, including:
a fourth receiving module, configured to receive a second request message sent by a first network element;
a fifth determination module, configured to determine, according to the first request message, whether a potential UE-to-Network (U2N) relay is available for providing a required relay service for a remote UE, and obtain a determination result; and
a fourth sending module, configured to return a second response message to the first network element according to the determination result.

A ninth aspect of embodiments of the present disclosure provides a communication device, including a processor, a transceiver, a memory, and an executable program stored in the memory and capable of being run by the processor, wherein the processor performs the method for processing the information provided in the first to fourth aspects when running the executable program.

A tenth aspect of embodiments of the present disclosure provides a computer storage medium having an executable program stored thereon, wherein the executable program, when performed by a processor, is capable of implementing the method for processing the information provided in the first to fourth aspects.

In the technical solutions provided by embodiment of the present disclosure, the first network element will provide the intermediate key required for the relay discovery key for the security protection of the mutual discovery between the U2N relay and the remote UE, so that the U2N relay and the remote UE can generate the relay discovery key based on the intermediate key, and use the relay discovery key to protect the discovery message of the mutual discovery between the U2N relay and the remote UE, thereby improving the security of the mutual discovery between the U2N relay and the remote UE.

It should be noted that the above general description and the following detailed description are merely exemplary and explanatory and should not be construed as limiting of embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain principles of embodiments of the present disclosure.
FIG. 1 shows a schematic structural diagram of a wireless communication system according to an embodiment of the present disclosure;
FIG. 2 shows a schematic flowchart of a method for processing information according to an embodiment of the present disclosure;
FIG. 3 shows a schematic flowchart of a method for processing information according to an embodiment of the present disclosure;
FIG. 4 shows a schematic flowchart of a method for processing information according to an embodiment of the present disclosure;
FIG. 5 shows a schematic flowchart of a method for processing information according to an embodiment of the present disclosure;
FIG. 6 shows a schematic flowchart of a method for processing information according to an embodiment of the present disclosure;
FIG. 7 shows a schematic flowchart of a method for processing information according to an embodiment of the present disclosure;
FIG. 8 shows a schematic flowchart of a method for processing information according to an embodiment of the present disclosure;
FIG. 9 shows a schematic flowchart of a method for processing information according to an embodiment of the present disclosure;
FIG. 10 shows a schematic flowchart of a method for processing information according to an embodiment of the present disclosure;
FIG. 11 shows a schematic flowchart of a method for processing information according to an embodiment of the present disclosure;
FIG. 12 shows a schematic flowchart of a method for processing information according to an embodiment of the present disclosure;
FIG. 13 shows a schematic flowchart of a method for processing information according to an embodiment of the present disclosure;
FIG. 14 shows a schematic structural diagram of an apparatus for processing information according to an embodiment of the present disclosure;
FIG. 15 shows a schematic structural diagram of an apparatus for processing information according to an embodiment of the present disclosure;
FIG. 16 shows a schematic structural diagram of an apparatus for processing information according to an embodiment of the present disclosure;
FIG. 17 shows a schematic structural diagram of an apparatus for processing information according to an embodiment of the present disclosure;
FIG. 18 shows a schematic structural diagram of a UE according to an embodiment of the present disclosure; and
FIG. 19 shows a schematic structural diagram of a communication device according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the present disclosure. Instead, they are merely examples of apparatuses and methods consistent with some aspects of the embodiments of the present disclosure.

The terms used in the embodiments of the present disclosure are merely for the purpose of describing particular embodiments and are not intended to limit the embodiments of the present disclosure. As used in the present disclosure, the singular forms "a", "said" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of embodiments of the present disclosure, first information may also be referred to as second information, and similarly, the second information may also be referred to as the first information. Depending on the context, the word "if" as used herein can be interpreted as "upon" or "when" or "in response to determination".

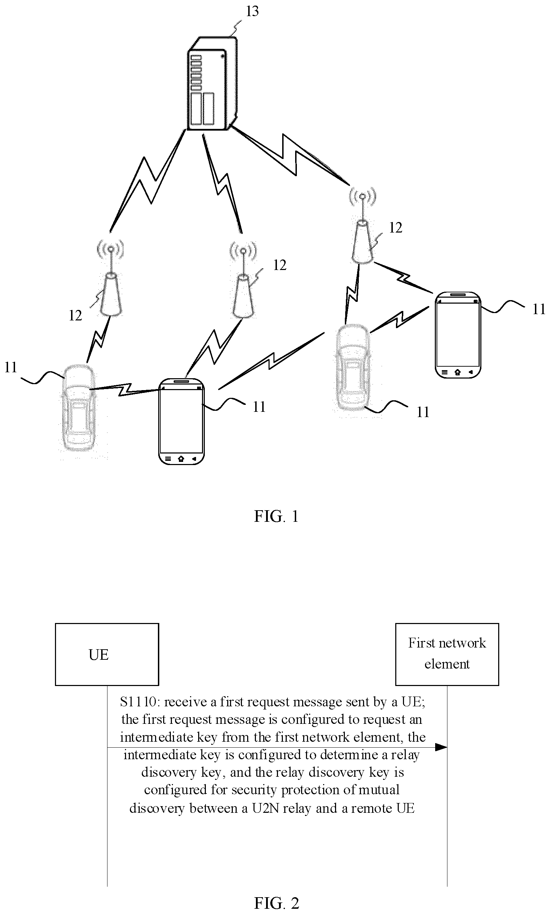

Reference is made to FIG. 1, which shows a schematic structural diagram of a wireless communication system provided by an embodiment of the present disclosure. As illustrated in FIG. 1, the wireless communication system is a communication system based on cellar mobile communication technologies. The wireless communication system may include several UEs 11 and several access devices 12.

The UE 11 may refer to a device that provides voice and/or data connectivity to a user. The UE 11 may communicate with one or more core networks via a Radio Access Network (RAN). The UE 11 may be an Internet of Things UE, such as a sensor device, a mobile phone (or called "cellular" phone) and a computer with the Internet of Things UE, for example, may be a fixed, portable, pocket-sized, handheld, built-in computer or vehicle-mounted device. For example, the UE may be a station (STA), a subscriber unit, a subscriber station, a mobile station, a mobile, a remote station, an access point, a remote terminal, an access terminal, a user terminal, a user agent, a user device, or user equipment. Or, the UE 11 may also be a device of an unmanned aerial vehicle. Or, the UE 11 may also be a vehicle-mounted device, such as a trip computer with a wireless communication function, or a wireless communication device connected to an external trip computer. Or, the UE 11 may also be a roadside device, such as a streetlight, a signal light or another roadside device with a wireless communication function.

The access device 12 can be a network-side device in a wireless communication system. The wireless communication system can be a 5G system, also known as a New Radio (NR) system or a 5G NR system. Or, the wireless communication system may also be a next-generation system of 5G system or a MTC system. An access network in the 5G system can be referred to as a New Generation-Radio Access Network (NG-RAN).

The access device 12 can be a gNB with a central distributed architecture in the 5G system. When the access device 12 adopts the central distributed architecture, it usually includes a Central Unit (CU) and at least two Distributed Units (DUs). The CU is provided with a protocol stack of a Packet Data Convergence Protocol (PDCP) layer, a Radio Link Control (RLC) layer, and a Media Access Control (MAC) layer. The DU is provided with a protocol stack of a Physical (PHY) layer. A specific implementation of the access device 12 is not limited in embodiments of the present disclosure.

A wireless connection can be established between the access device 12 and the UE 11 through a radio air interface. In different implementations, the radio air interface is a radio air interface based on a 5th generation mobile communication network technology (5G) standard, such as the NR. Or, the radio air interface may also be a radio air interface based on a 5G next-generation mobile communication network technology standard.

As shown in FIG. 2, embodiments of the present disclosure provide a method for processing information, which is performed by a first network element. The method includes:
in S1110, a first request message sent by a UE is received; and
the first request message is configured to request an intermediate key from the first network element, the intermediate key is configured to determine a relay discovery key, and the relay discovery key is configured for security protection of mutual discovery between a U2N relay and a remote UE.

In some embodiments, the first network element may include but is not limited to network elements of various core networks. For example, the first network element may be a Direct Discovery Name Management Function (DDNMF).

The UE may be the remote UE that needs to obtain a relay service, or the U2N relay that can provide the relay service.

If the UE is the remote UE, the first network element may be a DDNMF connected to the remote UE, and if the UE is the U2N relay, the first network element may be a DDNMF connected to the U2N relay.

The DDNMF receives the first request message, which may be a relay discovery key request message, etc., requesting the DDNMF to generate a message on security information related to the relay discovery key. For example, in embodiments of the present disclosure, the first request message is used for the UE to request the DDNMF for the intermediate key for the relay discovery key for discovering the U2N relay.

The intermediate key may be a key parameter for generating the relay discovery key, and there may be one or more intermediate keys.

For example, the intermediate key may be a string of a preset length, and the intermediate key may be a binary string of 128 bits or 256 bits. Note that, this is only an example of the intermediate key, and the specific implementation is not limited to this example.

The intermediate key may also be called a relay discovery intermediate key or a Proximity Based Service Relay Discovery Intermediate Key (PRDK).

The first request message may include at least one of:
a request indication, configured to indicate that the first request message is configured to request generation of security information of the relay discovery key;
a UE identity;
a Relay Service Code (RSC);
security capability information of the UE, at least indicating a security algorithm supported by the UE.

For example, when the remote UE is still within the network coverage, it sends the first request message to the first network element in advance. If the first network element provides the remote UE with the intermediate key for generating the relay discovery key, the remote UE will receive the intermediate key. When the remote UE subsequently moves out of the network coverage, it can generate the relay discovery key based on the intermediate key, and the relay discovery key is used for protection for the remote UE to discover the U2N relay that provides the relay service for it.

After receiving the first request message, the first network element can determine whether it is necessary to provide the intermediate key to the UE that sent the first request message. If it is determined to provide the intermediate key, the first network element will generate the intermediate key and carry the intermediate key in a first response message of the first request message to return it to the UE. Subsequently, the UE can generate, based on the intermediate key, the relay discovery key for protecting the mutual discovery between the U2N relay and the remote UE.

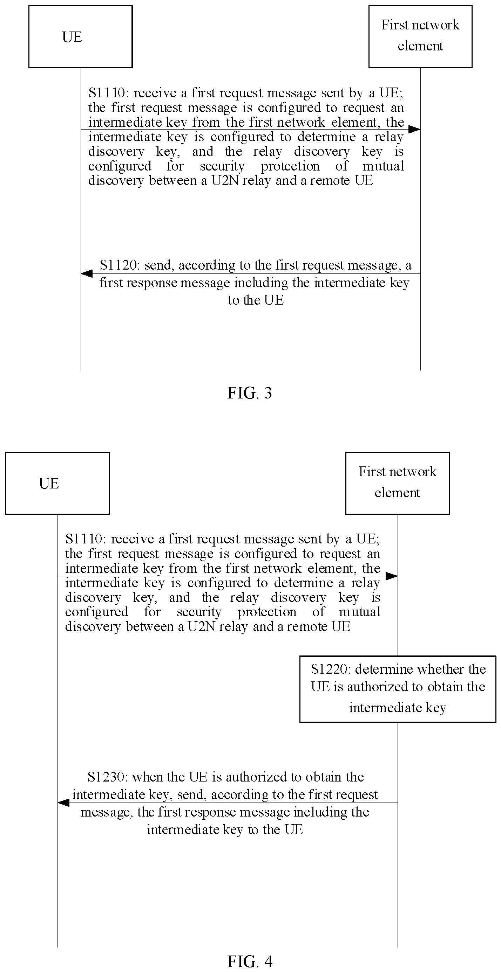

In some embodiments, as shown in FIG. 3, the method further includes:
in S 1120, according to the first request message, a first response message including the intermediate key is sent to the UE.

The first network element may generate, according to the first request message, the intermediate key for the UE, and carry the intermediate key in the first response message to return it to the UE.

In some embodiments, if the first network element refuses to generate the intermediate key for the UE, it may send a first rejection message to the UE. Alternatively, the first network element refusing to generate the intermediate key for the UE may be stopping a configuration process of the intermediate key, that is, the first network element ignores the first request message and do not return any message to the UE.

For example, the first network element may verify whether the corresponding UE has an authority to provide and/or obtain the U2N relay. If so, it is determined that the intermediate key can be configured for the UE. Otherwise, the intermediate key may not be configured for the UE.

As another example, the legality of the identity of the UE is verified based on the UE identity. If the identity of the UE is forged, it means that the UE is not a trusted UE, and the generation of the intermediate key for the UE can also be refused.

In short, if the intermediate key is generated for the UE, the intermediate key will be carried in the first response message and returned to the UE.

As shown in FIG. 4, embodiments of the present disclosure provide a method for processing information, which is performed by a first network element. The method includes:
in S1210, a first request message sent by a UE is received;
in S 1220, it is determined whether the UE is authorized to obtain an intermediate key; and
in S1230, when the UE is authorized to obtain the intermediate key, a first response message including the intermediate key is sent to the UE according to the first request message.

The first request message may at least carry an identity of the UE, which includes but is not limited to: a Subscription Concealed Identifier (SUCI) and/or a Subscription Permanent Identifier (SUCI), etc.

In some embodiments, the first request message further includes a RSC, which identifies a service type involved in the relay service. That is, in some embodiments, different RSCs represent different relay service types.

In an embodiment, the first network element can determine, according to the identity of the UE, whether the UE has signed the relay service or has signed to provide the relay service. If the UE has not signed the relay service and has not signed to provide the relay service, the UE may not have the authority to obtain the intermediate key.

In another embodiment, the first network element may also determine, according to the RSC, whether the UE has signed the relay service identified by the RSC. If so, the corresponding UE has the authority to obtain the intermediate key. Otherwise, it can be considered that the UE does not have the authority to obtain or provide the relay service.

In some embodiments, the S 1220 may include: when the UE is the U2N relay, it is determined whether the U2N relay is authorized to provide the relay service; or when the UE is the remote UE, it is determined whether the remote UE is authorized to obtain the relay service.

In some embodiments, the first network element may determine, based on local configuration information, whether the U2N relay and/or the remote UE has the authority to provide or obtain the corresponding relay service.

In some other embodiments, the first network element may also determine, by querying subscription data in a User Data Management (UDM) network element, etc., whether the corresponding UE has the authority to obtain or provide the relay service.

For example, the first request message includes an identity of the UE and a Relay Service Code (RSC); and
determining whether the UE is authorized to obtain the intermediate key includes:
sending a query request to a second network element, and the query request at least includes the identity of the UE;
receiving a query result returned based on the query request; and
determining, according to the query result, whether the UE is authorized to obtain the relay service.

For example, the second network element includes but is not limited to the UDM. For example, the second network element may also include a Unified Data Repository (UDR).

In some embodiments, the first request message includes at least the RSC, and the method further includes:
generating the intermediate key according to the RSC.

In embodiments of the present disclosure, the intermediate key will be generated according to the RSC, that is, the RSC will be used as an input parameter of a key generation function for generating the intermediate key, so as to obtain the intermediate key.

For example, a string itself corresponding to the RSC and a length of the string corresponding to the RSC are used as input parameters of the key generation function to obtain the intermediate key.

There are many manners to generate the intermediate key based on the RSC, and the specific implementation is not limited to the above examples.

If the intermediate key is generated based on the RSC, on the one hand, relay services involved in different RSCs will obtain different intermediate keys, thereby ensuring the uniqueness of the intermediate key; on the other hand, intermediate keys involved in the same RSC may obtain the same intermediate key. The relay discovery key generated based on the same intermediate key facilitates the mutual discovery of the remote UE and the U2N relay involved in the same relay service.

In some embodiments, the first request message further includes security capability information indicating a security capability of the UE, and the method further includes:

when the UE is the U2N relay, determining, according to the security capability information of the U2N relay, a security algorithm for the U2N relay to provide relay service discovery, and an algorithm identity of the security algorithm is carried in the first response message and returned to the U2N relay.

For example, the security capability information indicates which security algorithms the UE supports.

The security algorithm includes but is not limited to at least one of:
a confidentiality protection algorithm for confidentiality protection; or
an integrity protection algorithm for integrity verification.

Note that, the above are just examples of security algorithms, and the specific implementation is not limited to the above examples.

If the UE is the U2N relay, the security algorithm selected for the U2N relay may include the confidentiality protection algorithm and/or the integrity protection algorithm, and the first response message may include an algorithm identity of a confidentiality protection algorithm selected from confidentiality protection algorithms supported by the U2N relay, and an algorithm identity of an integrity protection algorithm selected from integrity protection algorithms supported by the U2N relay.

In some embodiments, the first request message further includes a RSC and security capability information indicating the UE security capability; and
the method further includes: when the UE is the remote UE, determining a potential U2N relay that provides the remote UE with a relay service identified by the RSC; and determining, according to the security capability information of the remote UE, whether a security algorithm supported by the remote UE is included in a security algorithm used by the potential U2N relay to provide relay service discovery.

Sending, according to the first request message, the first response message including the intermediate key to the UE includes:
when the security algorithm supported by the remote UE is included in the security algorithm used by the potential U2N relay to provide the relay service discovery, sending, according to the first request message, the first response message to the remote UE, and the first response message includes the intermediate key and an algorithm identity of the security algorithm used by the potential U2N relay to provide the relay service discovery.

The potential U2N relay may be any UE that can provide the relay service. The potential U2N relay may also be referred to as a candidate UE or an alternative UE.

For example, the potential U2N relay may be one or more UE groups, and one UE group may include one or more UEs.

When a security algorithm for the remote UE is selected, first potential U2N relays are determined according to a relay service required by the remote UE identified by the RSC in the first request message, and these potential U2N relays may be U2N relays that can provide the relay service identified by the RSC. Then, it is determined whether the security algorithm for providing the relay service discovery, which is selected for these potential U2N relays, is included in the security algorithms supported by the remote UE. If so, the security algorithm for the potential U2N relay to provide the relay service discovery is selected as the security algorithm for the remote UE to obtain the relay service discovery.

Similarly, the security algorithm selected for the remote UE may also include: a confidentiality protection algorithm and/or an integrity protection algorithm. Thus, the first response message returned to the remote UE may also include: an algorithm identity of the confidentiality protection algorithm and/or an algorithm identity of the integrity protection algorithm.

In some embodiments, determining, according to the RSC of the remote UE, the potential U2N relay that provides the relay service for the remote UE includes:
sending, according to the RSC of the remote UE, a second request message to a proximity based service, and the second request message includes the RSC of the remote UE;
receiving a second response message returned by the second request message; and
determining, according to the second response message, the potential U2N relay that provides the relay service for the remote UE.

For example, the Proximity Based Service (ProSe) can also be called a service based on short distance. In embodiments of the present disclosure, the proximity based service can be deployed in the core network of the mobile communication network or outside the core network. The proximity based service stores information of U2N relays that can provide various relay services.

In embodiments of the present disclosure, the first network element of the remote UE, such as the DDNMF, can communicate directly with the proximity based service. The proximity based service stores an identity of the potential U2N relay, a RCS of a relay service that the potential U2N relay can provide, and a RCS of a relay service that the remote UE can obtain, so as to determine whether the corresponding potential U2N relay can provide the required relay service for the remote UE.

In some embodiments, the first response message further includes validity time information configured to determine a validity time of the intermediate key.

For example, the validity time information may include duration information, which indicates a validity period of the intermediate key. For example, a time when the UE receives the first response message may be a starting time of the validity time, and a timer for timing the validity period is started. If the timer times out, it means that the intermediate key is invalid and can no longer be used to generate the relay discovery key required for discovery between UEs. If the UE finds that the intermediate key requested last time is invalid, it can request a new intermediate key by sending the aforementioned first request message.

As another example, the validity time information may also include: validity starting time information and a duration offset; or validity starting time information and ending time information, etc.

In summary, the first response message contains the validity time information. The introduction of this validity time information can alleviate the security problem caused by the leakage of the intermediate key when it is valid for a long time, and improve the security of the mutual discovery between the remote UE and the U2N relay.

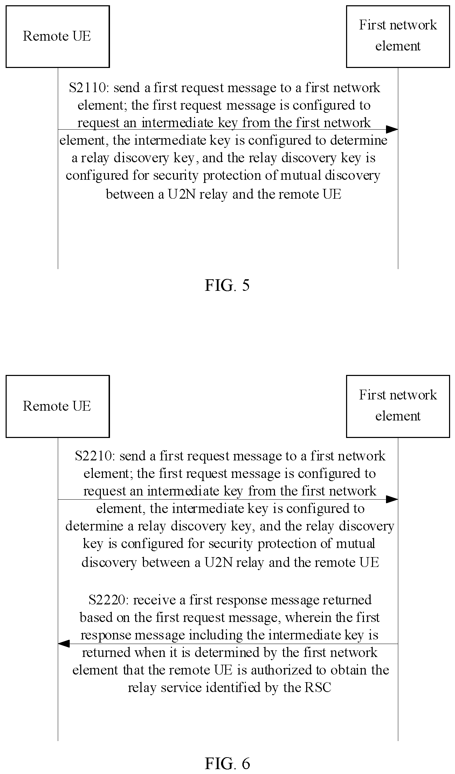

As shown in FIG. 5, embodiments of the present disclosure provide a method for processing information, which is performed by a remote UE. The method includes:
in S2110, a first request message is sent to a first network element, the first request message is configured to request an intermediate key from the first network element, the intermediate key is configured to determine a relay discovery key, and the relay discovery key is configured for security protection of mutual discovery between a U2N relay and the remote UE.

The method for processing the information is performed by the remote UE, and the relay discovery key is mainly configured to protect the process of the remote UE discovering the U2N relay.

The remote UE is a UE that requires other UEs to provide the relay service.

For example, the remote UE is located outside the network coverage and is indirectly connected to the 3GPP network through a PC5 connection with a UE located within the network coverage.

As another example, the remote UE is located at the edge of the network coverage or in an area where the network signal is not very good, and is indirectly connected to the 3GPP network through the PC5 connection with the UE located within the network coverage and at a location with the good network signal. The data subsequently sent by the network to the remote UE can be received from the network and forwarded to the remote UE by the U2N relay. The data reported by the remote UE is first transmitted to the U2N relay through the PC5 connection, and then transmitted to the network by the U2N relay.

The remote UE may send the first request message to the first network element to which it is connected, such as the DDNMF. The first request message is configured to request the intermediate key, and the requested intermediate key is used as a key parameter for the remote UE to generate the relay discovery key.

In some embodiments, the first request message includes an identity of the remote UE and a Relay Service Code (RSC), and the identity of the remote UE and the RSC are used by the first network element to determine whether the remote UE is authorized to obtain a relay service identified by the RSC.

As shown in FIG. 6, an embodiment of the present disclosure provides a method for processing information, which is performed by a remote UE, and the method includes:
in S2210, a first request message is sent to a first network element, the first request message is configured to request an intermediate key from the first network element, the intermediate key is configured to determine a relay discovery key, and the relay discovery key is configured for security protection of mutual discovery between a U2N relay and the remote UE; and
in S2220, a first response message returned based on the first request message is received, and the first response message including the intermediate key is returned when it is determined by the first network element that the remote UE is authorized to obtain the relay service identified by the RSC.

If the first network element determines to provide the intermediate key for the UE, the remote UE will receive the first response message containing the intermediate key.

Alternatively, in some embodiments, if the first network element determines not to provide the intermediate key for the remote UE, the remote UE may receive a first rejection message or fail to, within a preset time window for sending the first request message, receive a message which is returned based on the first request message.

For example, the first network element determines, based on the identity of the UE and/or the RSC carried in the first request message, whether the remote UE has the authority to obtain the corresponding relay service.

In some embodiments, the first request message further includes security capability information indicating a security capability of the UE; and
the first response message including the intermediate key and an algorithm identity is returned when a security algorithm supported by the remote UE is included in a security algorithm for a potential U2N relay to provide relay service discovery, and the algorithm identity indicates the security algorithm for the potential U2N relay to provide the relay service discovery.

The security capability information may indicate the security algorithm supported by the remote UE, or indicate a range of security algorithms supported by the remote UE.

The security capability information is carried in the first request message, and can be used by the first network element such as the DDNMF to select a security algorithm used by the remote UE to discover the U2N relay. The security algorithm includes but is not limited to: a confidentiality protection algorithm and/or an integrity protection algorithm.

In an embodiment, the method further includes:
generating the relay discovery key according to the intermediate key and the algorithm identity; and
protecting, according to the relay discovery key, discovery of the potential U2N relay providing the relay service.

For example, in embodiments of the present disclosure, after receiving the intermediate key and the algorithm identity, the remote UE generates the relay discovery key based on the intermediate key and the algorithm identity.

For example, the relay discovery key is generated according to the intermediate key itself, the algorithm identity and a length of a string corresponding to the algorithm identity. Note that, the above is only an example of generating the relay discovery key, and the specific implementation process is not limited to the above examples.

The relay discovery key may be used for the process of the remote UE discovering the U2N relay. The relay discovery key can be used for the confidentiality protection and/or the integrity protection for discovery of various messages transmitted by the U2N relay.

In an embodiment, a key generation function (or a key generation algorithm) for generating the integrity protection relay discovery key may be different from a key generation function (or a key generation algorithm) for generating the confidentiality protection relay discovery key.

In another embodiment, the key generation function (or the key generation algorithm) for generating the integrity protection relay discovery key may be the same as the key generation function (or the key generation algorithm) for generating the confidentiality protection relay discovery key. For example, generating the relay discovery key according to the intermediate key and the algorithm identity includes:
generating an integrity protection relay discovery key according to the intermediate key and an integrity protection algorithm identity; and
generating a confidentiality protection relay discovery key according to the intermediate key and a confidentiality protection algorithm identity.

In another embodiment, the key generation function (or the key generation algorithm) for generating the integrity protection relay discovery key may be the same as the key generation function (or the key generation algorithm) for generating the confidentiality protection relay discovery key. For example, generating the relay discovery key according to the intermediate key and the algorithm identity includes:
generating an integrity protection relay discovery key according to the intermediate key, a first parameter value and an integrity protection algorithm identity; and
generating a confidentiality protection relay discovery key according to the intermediate key, a second parameter value, and a confidentiality protection algorithm identity,
the second parameter value and the first parameter value are different parameter values of the same input parameter of a key generation function.

Here, the first parameter value and the second parameter value may be different parameter values of the same parameter, representing whether the integrity protection relay discovery key or the confidentiality protection relay discovery key is currently being generated.

In some embodiments, the first response message further includes validity time information;
generating the relay discovery key according to the intermediate key and the algorithm identity includes:
generating, within a validity time indicated by the validity time information, the relay discovery key according to the intermediate key and the algorithm identity.

If the first response message further includes the validity time information, the validity time of the intermediate key is determined according to the validity time information. If a time when the UE needs the relay service discovery is just within the validity time, the relay discovery key is generated according to the intermediate key and the algorithm identity, otherwise the intermediate key needs to be requested again.

In some embodiments, protecting, according to the relay discovery key, the discovery of the potential U2N relay providing the relay service includes:
receiving a broadcast relay discovery announcement message;
decrypting and verifying the relay discovery announcement message according to the relay discovery key; and
when the relay discovery announcement message is successfully decrypted and verified, determining the potential U2N relay as a U2N relay that provides the relay service to the remote UE.

For example, a UE that can server as the U2N relay will send a UE-to-NetworkRelay Announcement Message on a discovery channel of the PC5 connection. In this way, when the remote UE needs to obtain the relay service, it can monitor the discovery channel and may receive the relay discovery announcement message. The remote UE will use the confidentiality protection relay discovery key generated by itself to decrypt the received relay discovery announcement message and perform integrity verification through the integrity protection relay discovery key.

After the successful decryption and the integrity verification, the potential U2N relay is determined as the U2N relay providing the relay service for the remote UE.

In embodiments of the present disclosure, the potential U2N relay will actively broadcast the relay discovery announcement message on the discovery channel.

In another embodiment, the method further includes:
broadcasting a relay discovery request message which is encrypted and integrity protected using the relay discovery key;
receiving a relay discovery response message which is broadcasted by the potential U2N relay after successfully decrypting and verifying the relay discovery request message; and
when the relay discovery response message is successfully decrypted and verified, determining the potential U2N relay as the U2N relay that provides the relay service to the remote UE.

If the remote UE needs the relay service, it will actively send the relay discovery request message on the discovery channel of the PC5 connection. Here, the relay discovery request message encrypted and integrity protected by the relay discovery key may include:
performing the encryption protection on the relay discovery request message by using the confidentiality protection key, and performing the integrity protection on the relay discovery request message by using the integrity protection key.

If a potential U2N relay neighboring to the remote UE receives the relay discovery request message, it performs the integrity protection verification and decryption on the relay discovery request message. If the decryption and the verification are successful, the potential U2N relay sends the relay discovery response message on the discovery channel based on the relay discovery request message.

After receiving the relay discovery response message, the remote UE uses the relay discovery key generated by itself to perform the decryption and the integrity verification on the relay discovery response message. If the decryption and the integrity verification are successful, the potential U2N relay that sends the relay discovery response message can be determined as the U2N relay which is requested to provide the relay service.

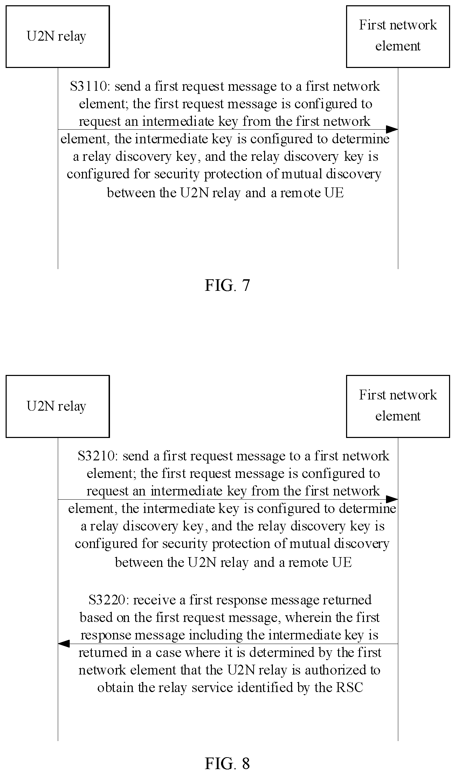

As shown in FIG. 7, embodiments of the present disclosure provide a method for processing information, which is performed by a U2N relay, and the method includes:
in S3110, a first request message is sent to a first network element, the first request message is configured to request an intermediate key from the first network element, the intermediate key is configured to determine a relay discovery key, and the relay discovery key is configured for security protection of mutual discovery between a U2N relay and the remote UE.

The U2N relay may be a UE that provides the relay service for other UEs. The U2N relay is typically located within the coverage of the 3GPP network, or the U2N relay is not only located within the coverage of the 3GPP network but also located in an area with a strong network signal. For example, the network signal is considered strong when it is higher than a preset threshold.

In some embodiments, the first request message includes an identity of the U2N relay and a Relay Service Code (RSC), and the identity of the U2N relay and the RSC are used by the first network element to determine whether the U2N relay is authorized to provide a relay service identified by the RSC.

As shown in FIG. 8, embodiments of the present disclosure provide a method for processing information, which is performed by a U2N relay, and the method includes:
in S3210, a first request message is sent to a first network element, the first request message is configured to request an intermediate key from the first network element, the intermediate key is configured to determine a relay discovery key, and the relay discovery key is configured for security protection of mutual discovery between a U2N relay and the remote UE; and
in S3220, a first response message returned based on the first request message is received, and the first response message including the intermediate key is returned when it is determined by the first network element that the U2N relay is authorized to obtain the relay service identified by the RSC.

If the first network element determines that the U2N relay has the authority to provide the relay service, the U2N relay will receive the first response message, which includes the intermediate key provided by the first network element.

If the first network element determines that the U2N relay does not have the authority to provide the relay service, the U2N relay will receive the first rejection message, or will fail to receive, within a preset time window which starts from the sending of the first request message, a message returned based on the first request message.

If the UE is the U2N relay, the relay discovery key is mainly configured to protect the process of the U2N relay discovering the remote UE.

In some embodiments, the first request message further includes security capability information indicating a security capability of the U2N relay, and the security capability information is used by the first network element to select a security algorithm for the U2N relay to provide relay service discovery.

An algorithm identity of the security algorithm selected by the first network element for the U2N relay to provide the relay service discovery is carried in the first response message.

The method for processing the information performed by the U2N relay may further include:
protecting, according to the relay discovery key, the discovery of the potential U2N relay providing the relay service.

For example, in embodiments of the present disclosure, after the U2N relay receives the intermediate key and the algorithm identity, it generates the relay discovery key based on the intermediate key and the algorithm identity.

For example, the relay discovery key is generated according to the intermediate key itself, the algorithm identity and a length of a string corresponding to the algorithm identity. Note that, the above is only an example of generating the relay discovery key, and the specific implementation process is not limited to the above examples.

The relay discovery key may be used for the process of the U2N relay discovering the remote UE. The relay discovery key can be used for the confidentiality protection and/or the integrity protection for discovery of various messages transmitted by the U2N relay.

In an embodiment, a key generation function (or a key generation algorithm) for generating the integrity protection relay discovery key may be different from a key generation function (or a key generation algorithm) for generating the confidentiality protection relay discovery key.

In another embodiment, the key generation function (or the key generation algorithm) for generating the integrity protection relay discovery key may be the same as the key generation function (or the key generation algorithm) for generating the confidentiality protection relay discovery key. For example, generating the relay discovery key according to the intermediate key and the algorithm identity includes:
generating an integrity protection relay discovery key according to the intermediate key and an integrity protection algorithm identity; and
generating a confidentiality protection relay discovery key according to the intermediate key and a confidentiality protection algorithm identity.

The second parameter value and the first parameter value are different parameter values of the same input parameter of a key generation function.

In another embodiment, the key generation function (or the key generation algorithm) for generating the integrity protection relay discovery key may be the same as the key generation function (or the key generation algorithm) for generating the confidentiality protection relay discovery key. For example, generating the relay discovery key according to the intermediate key and the algorithm identity includes:
generating an integrity protection relay discovery key according to the intermediate key, a first parameter value and an integrity protection algorithm identity; and
generating a confidentiality protection relay discovery key according to the intermediate key, a second parameter value, and a confidentiality protection algorithm identity,
the second parameter value and the first parameter value are different parameter values of the same input parameter of a key generation function.

Here, the first parameter value and the second parameter value may be different parameter values of the same parameter, representing whether the integrity protection key or the confidentiality protection key is currently being generated.

In some embodiments, the first response message further includes validity time information;
generating the relay discovery key according to the intermediate key and the algorithm identity includes:
generating, within a validity time indicated by the validity time information, the relay discovery key according to the intermediate key and the algorithm identity.

If the first response message further includes the validity time information, the validity time of the intermediate key is determined according to the validity time information. If a time when the UE needs the relay service is just within the validity time, the relay discovery key is generated according to the intermediate key and the algorithm identity, otherwise the intermediate key needs to be requested again.

In some embodiments, the method further includes:
broadcasting a relay discovery announcement message which is protected using the relay discovery key.

After the U2N relay generates the relay discovery key, it will actively broadcast the protected relay discovery announcement message. For example, the U2N relay broadcasts, on the discovery channel, the relay discovery announcement message protected by using the relay discovery key.

In this way, a remote UE with a relay demand monitors the relay discovery announcement message actively broadcast by the U2N relay, and can discover the U2N relay by decrypting and integrity verifying the relay discovery announcement message.

In another embodiment, the method further includes:
receiving a relay discovery request message;
decrypting and verifying the relay discovery request message using the relay discovery key; and
when the relay discovery request message is successfully decrypted and verified, broadcasting a relay discovery response message which is protected using the relay discovery key.

The U2N relay may not actively send the relay discovery announcement message, or may monitor the relay discovery request message when no relay discovery announcement message is sent. For example, the U2N relay monitors the relay discovery request message on the discovery channel, and then decrypts and verifies the relay discovery request message using the relay discovery key. The decryption and verification of the relay discovery request message may include: decrypting the relay discovery request message using a confidentiality protection key and verifying the relay discovery request message using an integrity protection key.

If the U2N relay successfully decrypts the relay discovery request message using its own confidentiality protection key, and successfully verifies the relay discovery request message using its own integrity protection key, the U2N relay is considered to have discovered the remote UE, and the U2N relay broadcasts the relay discovery response message to inform the remote UE. The sending of the relay discovery response message allows the remote UE to discover the U2N relay, thereby achieving the mutual discovery between the U2N relay and the remote UE.

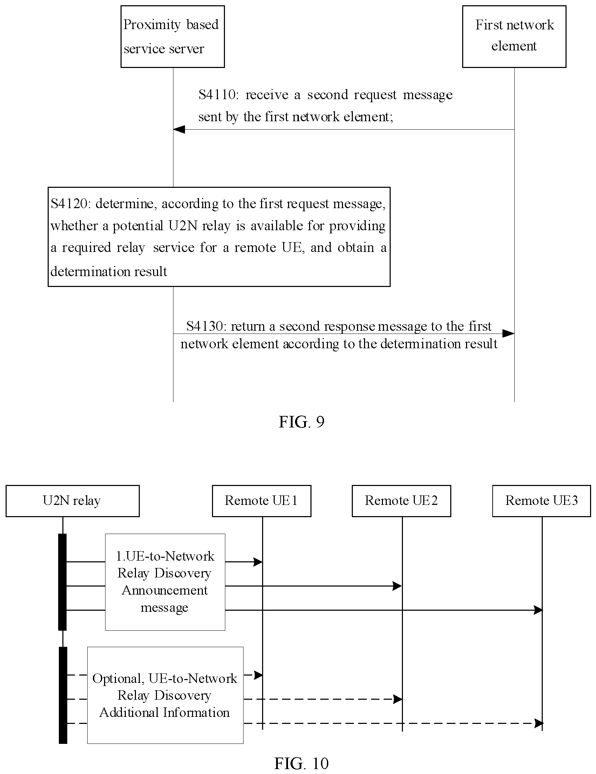

As shown in FIG. 9, a method for processing information in embodiments of the present disclosure is performed by a proximity based service, and the method includes:
in S4110, a second request message sent by a first network element is received;
in S4120, it is determined, according to the first request message, whether a potential U2N relay is available for providing a required relay service for a remote UE, and a determination result is obtained; and
in S4130, a second response message is returned to the first network element according to the determination result.

The first network element may be a DDNMF connected to the U2N relay, etc.

The second request message sent by the first network element based on the first request message of the remote UE is received. The second request message is used by the DDNMF to determine whether the relay service required by the remote UE can be provided by the potential U2N relay.

The second request message at least includes a RSC carried in the first request message. The RSC indicates a service involved in the relay service required by the remote UE.

The second response message may include a confirmation message and/or a rejection message. The confirmation message indicates that the potential U2N relay can provide the remote UE with the relay service identified by the RSC. The rejection message indicates that the potential U2N relay cannot provide the remote UE with the relay service identified by the RSC. In an embodiment, the second request message includes: the RSC of the relay service required by the remote UE, the identity of the remote UE, and the identity of the potential U2N relay. Since the second request message contains these contents, after receiving the second request message, the ProSe server will determine, based on the locally stored information related to the relay service, whether the relay service required by the remote UE can be performed by the corresponding potential U2N relay and obtain a determination result indicating that the potential U2N relay can provide the relay service for the corresponding remote UE, or obtain a determination result indicating that the potential U2N relay cannot provide the relay service for the corresponding remote UE.

Embodiments of the present disclosure provide a 5G DDNMF, which supports security protection of the 5G ProSe UE-to-Network relay discovery process.

The 5G DDNMF can provide a security parameter to protect a 5G ProSe UE-to-Network relay discovery message.

The 5G DDNMF can securely provide the generated security parameter to the remote UE and the U2N Relay.

The remote UE and the U2N relay can use the provided security parameter to derive the relay discovery key that protects and verifies the broadcast discovery message.

In an embodiment, both the U2N relay and the remote UE can receive the RSC sent by the network in advance. In another embodiment, both the U2N relay and the remote UE can be pre-configured with RSCs of various relay services when leaving the factory. Note that, the above is only an example of the U2N relay and the remote UE obtaining the RSC, and the specific implementation is not limited to this example.

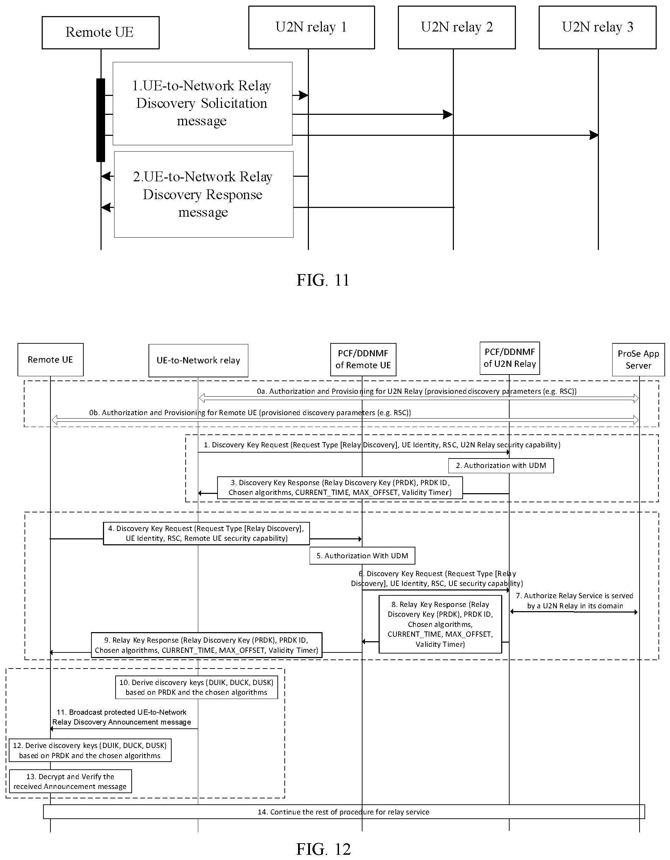

There are two modes for the mutual discovery between the U2N relay and the remote UE, which are mode A and mode B, respectively. FIG. 10 shows a process of implementing mutual discovery between the U2N relay and the remote UE by using mode A. FIG. 11 shows a process of implementing mutual discovery between the U2N relay and the remote UE by using mode B.

The mutual discovery between the U2N relay and the remote UE shown in FIG. 10 may include: the U2N relay actively broadcasts a relay discovery announcement; and
the remote UE monitors the relay discovery announcement actively broadcast by the U2N relay. If the remote UE monitors the broadcast relay discovery announcement, it uses the relay discovery key for the decryption and the integrity verification, and then it can be considered that the mutual discovery between the U2N relay and the remote UE is achieved.

In some cases, the U2N relay wants to broadcast more information, which can be informed to the neighboring remote UE through relay discovery additional information.

As shown in FIG. 11, the mutual discovery between the U2N relay and the remote UE may include:
the remote UE sends the broadcast relay discovery request message;

After the U2N relay monitors it, the U2N relay will use the relay discovery key to correctly decode and verify the relay discovery request message, and return a U2N relay discovery response message (referred to as the relay discovery response message for short).

The ProSe relay discovery parameter includes but is not limited to Relay Service Codes (RSCs), and the relay discovery parameter can be provisioned by the PCF during the service authorization and information provisioning procedure.

The security protection for the ProSe UE-to-Network relay discovery uses mode A.

The 5G DDNMF of the remote UE is configured with a mapping table between the RSCs and the addresses of the 5G DDNMF of the potential U2N relays providing the relay services represented by the RSCs.

A method for processing information shown in FIG. 12 may include:
0. the remote UE obtains the RSC during the relay service authorization and relay information provisioning procedure.
0b. the U2N relay obtains the discovery parameter (e.g., the RSC) during the service authorization and information provisioning procedure.
1. the U2N relay sends to its 5G DDNMF a relay discovery key request message. The message includes request type information indicating that the U2N relay is requesting a U2N Relay Discovery Intermediate Key (PRDK) from the 5G DDNMF, an identity of the U2N relay, a RSC of the U2N relay, and security capability information of the U2N relay. The PRDK is one of intermediate keys. The relay discovery key request message is one of the aforementioned first request message.
2. the 5G DDNMF of the U2N relay may check with the assistance of the U2N relay's UDM to verify that the U2N relay is authorized to provide the relay service for the relay service indicated by the RSC.
3. the U2N relay will receive the first response message. Specifically, based on the received RSC, the 5G DDNMF of the U2N relay determines the PRDK and the PRDK ID. Based on the received security capability information of the U2N relay, the 5G DDNMF of the U2N relay also chooses an algorithm used for encryption and integrity protection of the broadcast discovery message used for the discovery between the remote UE and the U2N relay. The 5G DDNMF of the U2N relay then sends the relay discovery key response message to the U2N relay.

In some embodiments, the first response message may further include current time information and a maximum offset, and/or duration information of the validity timer, and the current time information and the maximum offset may be used alone, and/or the duration information of the validity timer is used to determine whether the first response message is subject to a replay attack.

For example, the current time indicated by the current time information is not within the timing time range of the validity timer, and it is determined that the first request message is subject to the replay attack. For another example, a difference between the current time indicated by the current time information and the maximum offset is not within the timing time range of the validity timer, and it is determined that the first request message is subject to the replay attack. For yet another example, the sum of the current time indicated by the current time information and the maximum offset is not within the timing time range of the validity timer, and it is determined that the first request message is subject to the replay attack. Otherwise, it can be determined that the first request message is not subject to the replay attack.

4. the remote UE sends to its 5G DDNMF the relay discovery key request message. The message includes request type information indicating that the remote UE is requesting a U2N relay discovery intermediate key from the 5G DDNMF, a UE identity and a RSC.

5. the 5G DDNMF of the remote UE may check with the assistance of the remote UE's UDM to verify that the remote UE is authorized to perform U2N relay discovery for the relay service indicated by the RSC.

6. the 5G DDNMF of the remote UE locates the 5G DDNMF of the potential U2N relay based on the received RSC, then sends the relay discovery key request message to the 5G DDNMF of the U2N relay.

7. the 5G DDNMF of the U2N relay may check with the ProSe App server to authorize that the received RSC can be provided to the remote UE by one or more of the U2N relays in its domain. The ProSe App server may correspond to the above ProSe.

8. based on the received RSC, the 5G DDNMF of the U2N relay derives the PRDK (if already generated in step 3) and the PRDK ID. If the security capability of the remote UE contains the algorithm chosen in step 3, the 5G DDNMF of the U2N relay responds with the relay discovery key response message to the 5G DDNMF of the remote UE.

9. the 5G DDNMF of the remote UE forwards the relay discovery key response message (including the PRDK, the chosen algorithm) to the remote UE. The relay discovery key response message is one of the first response message.

10. the U2N relay derives the relay discovery key (DUIK, DUCK) based on the PRDK and the chosen algorithm. DUIK is the integrity protection relay discovery key, and DUCK is the confidentiality protection relay discovery key.

11. the U2N relay broadcasts a UE-to-Network Relay Discovery Announcement message which is protected using the relay discovery key and the chosen algorithm.

12. the remote UE derives the relay discovery key (DUIK, DUCK) based on the PRDK and the chosen algorithm. In some embodiments, the PRDK and the algorithm identity of the chosen security algorithm can also be used to determine the scrambled relay discovery key (or called the discovery scrambling sequence). The scrambled relay discovery key is the DUSK shown in FIG. 12, which can be used for scrambling and descrambling of the mutual discovery message between the U2N relay and the remote UE.

13. the remote UE decrypts and verifies the received UE-to-Network Relay Discovery Announcement message using the relay discovery key.

14. the remote UE and the U2N relay proceed with the rest of the procedure for the relay service.

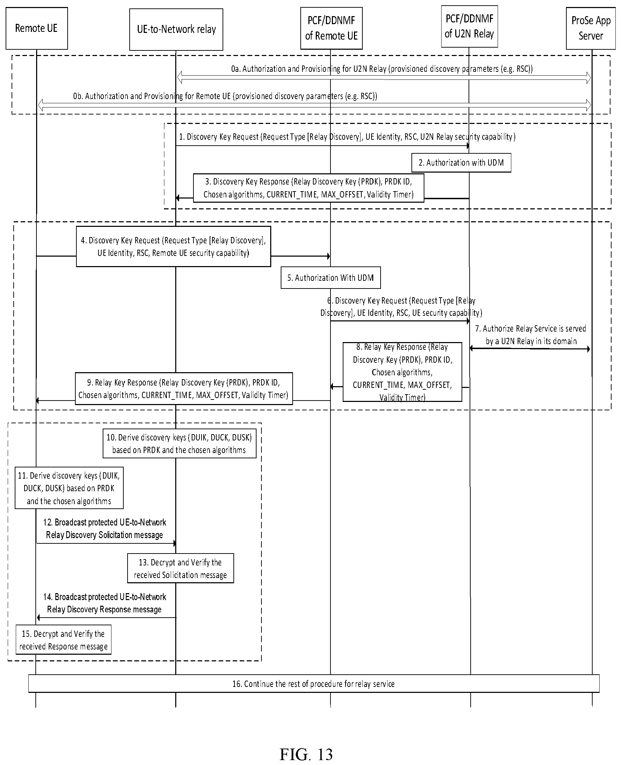

Referring to FIG. 13, a method for processing information provided by embodiments of the present disclosure may include:
0. the remote UE obtains the RSC during the relay service authorization and relay information provisioning procedure.
0b. the U2N relay obtains the discovery parameter (e.g., the RSC) during the service authorization and information provisioning procedure.
1. the U2N relay sends to its 5G DDNMF a relay discovery key request message. The message includes request type information indicating that the U2N relay is requesting a U2N Relay Discovery Intermediate Key (PRDK) from the 5G DDNMF, an identity of the U2N relay, a RSC of the U2N relay, and security capability information of the U2N relay. The PRDK is one of intermediate keys. The relay discovery key request message is one of the aforementioned first request message.
2. the 5G DDNMF of the U2N relay may check with the assistance of the U2N relay's UDM to verify that the U2N relay is authorized to provide the relay service for the relay service indicated by the RSC.
3. the U2N relay will receive the first response message. Specifically, based on the received RSC, the 5G DDNMF of the U2N relay determines the PRDK and the PRDK ID. Based on the received security capability information of the U2N relay, the 5G DDNMF of the U2N relay also chooses an algorithm used for encryption and integrity protection of the broadcast discovery message used for the discovery between the remote UE and the U2N relay. The 5G DDNMF of the U2N relay then sends the relay discovery key response message to the U2N relay. In some embodiments, the first response message may further include current time information and a maximum offset, and/or duration information of the validity timer, and the current time information and the maximum offset may be used alone, and/or the duration information of the validity timer is used to determine whether the first response message is subject to a replay attack.
   For example, the current time indicated by the current time information is not within the timing time range of the validity timer, and it is determined that the first request message is subject to the replay attack. For another example, a difference between the current time indicated by the current time information and the maximum offset is not within the timing time range of the validity timer, and it is determined that the first request message is subject to the replay attack. For yet another example, the sum of the current time indicated by the current time information and the maximum offset is not within the timing time range of the validity timer, and it is determined that the first request message is subject to the replay attack. Otherwise, it can be determined that the first request message is not subject to the replay attack.
4. the remote UE sends to its 5G DDNMF the relay discovery key request message. The message includes request type information indicating that the remote UE is requesting a U2N relay discovery intermediate key from the 5G DDNMF, a UE identity and a RSC.
5. the 5G DDNMF of the remote UE may check with the assistance of the remote UE's UDM to verify that the remote UE is authorized to perform U2N relay discovery for the relay service indicated by the RSC.
6. the 5G DDNMF of the remote UE locates the 5G DDNMF of the potential U2N relay based on the received RSC, then sends the relay discovery key request message to the 5G DDNMF of the U2N relay.
7. the 5G DDNMF of the U2N relay may check with the ProSe App server to authorize that the received RSC can be provided to the remote UE (based on the UE identity of the remote UE) by one of the U2N relays in its domain.
8. based on the received RSC, the 5G DDNMF of the U2N relay derives the PRDK (if already generated in step 3) and the PRDK ID. If the security capability of the remote UE contains the algorithm chosen in step 3, the 5G DDNMF of the U2N relay responds with the relay discovery key response message to the 5G DDNMF of the remote UE.
9. the 5G DDNMF of the remote UE forwards the relay discovery key response message (including the PRDK, the chosen algorithm) to the remote UE. The relay discovery key response message is one of the first response message.
10. the U2N Relay derives the relay discovery key (DUIK, DUCK) based on the PRDK and the chosen algorithm.
11. the remote UE derives the relay discovery key (DUIK, DUCK) based on the PRDK and the chosen algorithm.
   In some embodiments, the PRDK and the algorithm identity of the chosen security algorithm can also be used to determine the scrambled relay discovery key (or called the discovery scrambling sequence). The scrambled relay discovery key is the DUSK shown in FIG. 13, which can be used for scrambling and descrambling of the mutual discovery message between the U2N relay and the remote UE.
12. the remote UE broadcasts a UE-to-Network Relay Discovery Solicitation message which is protected using the relay discovery key and the chosen algorithm.
13. the U2N relay decrypts and verifies the received UE-to-Network Relay Discovery Solicitation message using the relay discovery key.
14. the U2N relay broadcasts a UE-to-Network Relay Discovery Response message which is protected using the relay discovery key and the chosen algorithm.
15. the remote UE decrypts and verifies the received UE-to-Network Relay Discovery Response message using the relay discovery key.
16. the remote UE and the U2N relay proceed with the rest of the procedure for the relay service.

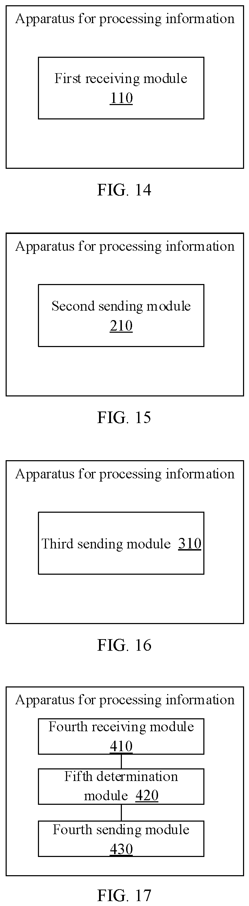

As shown in FIG. 14, embodiments of the present disclosure provide an apparatus for processing information, and the apparatus includes:
a first receiving module 110, configured to receive a first request message sent by a User Equipment (UE);
the first request message is configured to request an intermediate key from the first network element, the intermediate key is configured to determine a relay discovery key, and the relay discovery key is configured for security protection of mutual discovery between a UE-to-Network (U2N) relay and a remote UE.

The apparatus for processing the information may be included in the first network element, and the first network element includes but is not limited to a DDNMF.

In some embodiments, the apparatus for processing the information further includes a storage module, which can store the first request message.

In an embodiment, the first receiving module 110 may be a program module; after the program module is performed by a processor, the above operations can be implemented.

In another embodiment, the first receiving module 110 may be a module in which software and hardware are combined. The module in which software and hardware are combined includes but is not limited to a programmable array, which includes but is not limited to a field programmable array and/or a complex programmable array.

In some other embodiments, the first receiving module 110 may be a pure hardware module, and the pure hardware module includes but is not limited to a dedicated integrated circuit.

In an embodiment, the apparatus further includes:
a first sending module, configured to send, according to the first request message, a first response message including the intermediate key to the UE.

In an embodiment, the apparatus further includes:
a first determination module, configured to determine whether the UE is authorized to obtain the intermediate key; and
the first sending module is configured to, when the UE is authorized to obtain the intermediate key, send, according to the first request message, the first response message including the intermediate key to the UE.

In an embodiment, the first determination module is configured to, when the UE is the U2N relay, determine whether the U2N relay is authorized to provide a relay service; or, when the UE is the remote UE, determine whether the remote UE is authorized to obtain the relay service.

In an embodiment, the first request message includes an identity of the UE and a Relay Service Code (RSC); and
the first determination module is configured to send a query request to a second network element, and the query request at least includes the identity of the UE; receive a query result returned based on the query request; and determine, according to the query result, whether the UE is authorized to obtain the relay service.

In an embodiment, the first request message at least includes a Relay Service Code (RSC);
the apparatus further includes:
a first generation module, configured to generate the intermediate key according to the RSC.

In an embodiment, the first request message further includes security capability information indicating a security capability of the UE; the apparatus further includes:
a second determination module, configured to, when the UE is the U2N relay, determine, according to the security capability information of the U2N relay, a security algorithm for the U2N relay to provide relay service discovery, and an algorithm of the security algorithm is carried in the first response message and returned to the U2N relay.

In an embodiment, the first request message further includes: a RSC and security capability information indicating a security capability of the UE;
the apparatus further includes:
a third determination module, configured to, when the UE is the remote UE, determining a potential U2N relay that provides the remote UE with a relay service identified by the RSC; and determine, according to the security capability information of the remote UE, whether a security algorithm supported by the remote UE is included in a security algorithm used by the potential U2N relay to provide relay service discovery; and
the first sending module is configured to, when the security algorithm supported by the remote UE is included in the security algorithm used by the potential U2N relay to provide the relay service discovery, send, according to the first request message, the first response message to the remote UE, and the first response message includes the intermediate key and an algorithm identity of the security algorithm used by the potential U2N relay to provide the relay service discovery.

In an embodiment, the third determination module is configured to send, according to the RSC of the remote UE, a second request message to a proximity based service, and the second request message includes the RSC of the remote UE; receive a second response message returned by the second request message; and determine, according to the second response message, the potential U2N relay that provides the remote UE with the relay service.

In an embodiment, the first response message further includes validity time information configured to determine a validity time of the intermediate key.

As shown in FIG. 15, embodiments of the present disclosure provide an apparatus for processing information, and the apparatus includes:
a second sending module 210, configured to send a first request message to a first network element, the first request message is configured to request an intermediate key from the first network element, the intermediate key is configured to determine a relay discovery key, and the relay discovery key is configured for security protection of mutual discovery between a UE-to-Network (U2N) relay and the remote UE.

The apparatus for processing the information may be included in the remote UE.

In some embodiments, the apparatus for processing the information further includes a storage module, which can store the first request message.

In an embodiment, the second sending module 210 may be a program module; after the program module is performed by a processor, the above operations can be implemented.

In another embodiment, the second sending module 210 may be a module in which software and hardware are combined. The module in which software and hardware are combined includes but is not limited to a programmable array, which includes but is not limited to a field programmable array and/or a complex programmable array.

In some other embodiments, the second sending module 210 may be a pure hardware module, and the pure hardware module includes but is not limited to a dedicated integrated circuit.

In an embodiment, the first request message includes an identity of the remote UE and a Relay Service Code (RSC), and the identity of the remote UE and the RSC are used by the first network element to determine whether the remote UE is authorized to obtain a relay service identified by the RSC;
the apparatus further includes:
a second receiving module is configured to receive a first response message returned based on the first request message, and the first response message including the intermediate key is returned in a case where it is determined by the first network element that the remote UE is authorized to obtain the relay service identified by the RSC

In an embodiment, the first request message further includes security capability information indicating a security capability of the remote UE; and
the first response message including the intermediate key and an algorithm identity is returned in a case where a security algorithm supported by the remote UE is included in a security algorithm for a potential U2N relay to provide relay service discovery, and the algorithm identity indicates the security algorithm for the potential U2N relay to provide the relay service discovery.

In an embodiment, the apparatus further includes:
a second generation module, configured to generate the relay discovery key according to the intermediate key and the algorithm identity; and
a first protection module, configured to protect, according to the relay discovery key, discovery of the potential U2N relay providing the relay service.

In an embodiment, the second generation module is configured to generate an integrity protection relay discovery key according to the intermediate key, a first parameter value, and an integrity protection algorithm identity; and generate a confidentiality protection relay discovery key according to the intermediate key, a second parameter value, and a confidentiality protection algorithm identity; and the second parameter value and the first parameter value are different parameter values of the same input parameter of a key generation function.

In an embodiment, the second generation module is configured to generate an integrity protection relay discovery key according to the intermediate key, a first parameter value, a RSC of a relay service and an integrity protection algorithm identity; and generate a confidentiality protection relay discovery key according to the intermediate key, a second parameter value, the RSC of the relay service and a confidentiality protection algorithm identity.

In an embodiment, the first response message further includes validity time information; and
the second generation module is configured to generate, within a validity time indicated by the validity time information, the relay discovery key according to the intermediate key and the algorithm identity.

In an embodiment, the first protection module is configured to receive a broadcast relay discovery announcement message; decrypt and verify the relay discovery announcement message according to the relay discovery key; and when the relay discovery announcement message is successfully decrypted and verified, determine the potential U2N relay as a U2N relay that provides the remote UE with the relay service.

In an embodiment, the second sending module 210 is further configured to broadcast a relay discovery request message which is encrypted and integrity protected using the relay discovery key;
the second receiving module is further configured to receive a relay discovery response message which is broadcast by the potential U2N relay after successfully decrypting and verifying the relay discovery request message; and
the apparatus further includes:
   a fourth determination module, configured to, when the relay discovery response message is successfully decrypted and verified, determine the potential U2N relay as the U2N relay that provides the remote UE with the relay service.

As shown in FIG. 16, embodiments of the present disclosure provide an apparatus for processing information, and the apparatus includes:
a third sending module 310, configured to send a first request message to a first network element, the first request message is configured to request an intermediate key from the first network element, the intermediate key is configured to determine a relay discovery key, and the relay discovery key is configured for security protection of mutual discovery between the U2N relay and a remote UE.

The apparatus for processing the information may be included in the U2N relay.

In some embodiments, the apparatus for processing the information further includes a storage module, which can store the first request message.

In an embodiment, the third sending module 310 may be a program module; after the program module is performed by a processor, the above operations can be implemented.

In another embodiment, the third sending module 310 may be a module in which software and hardware are combined. The module in which software and hardware are combined includes but is not limited to a programmable array, which includes but is not limited to a field programmable array and/or a complex programmable array.

In some other embodiments, the third sending module 310 may be a pure hardware module, and the pure hardware module includes but is not limited to a dedicated integrated circuit.

In an embodiment, the first request message includes an identity of the U2N relay and a Relay Service Code (RSC), and the identity of the U2N relay and the RSC are used by the first network element to determine whether the U2N relay is authorized to provide a relay service identified by the RSC;
the apparatus further includes:
a third receiving module, configured to receive a first response message returned based on the first request message, and the first response message including the intermediate key is returned in a case where it is determined by the first network element that the U2N relay is authorized to obtain the relay service identified by the RSC.

In an embodiment, the first request message further includes security capability information indicating a security capability of the U2N relay, the security capability information is used by the first network element to select a security algorithm for the U2N relay to provide relay service discovery, and an algorithm identity of the security algorithm selected by the first network element for the U2N relay to provide the relay service discovery is carried in the first response message.

In an embodiment, the apparatus further includes:
a third generation module, configured to generate the relay discovery key according to the intermediate key and the algorithm identity.

In an embodiment, the third generation module is configured to generate an integrity protection relay discovery key according to the intermediate key, a first parameter value, and an integrity protection algorithm identity; and generate a confidentiality protection relay discovery key according to the intermediate key, a second parameter value, and a confidentiality protection algorithm identity; and the second parameter value and the first parameter value are different parameter values of the same input parameter of a key generation algorithm.

In an embodiment, the third generation module is configured to generate an integrity protection relay discovery key according to the intermediate key, a first parameter value, a RSC of a relay service and an integrity protection algorithm identity; and generate a confidentiality protection relay discovery key according to the intermediate key, a second parameter value, the RSC of the relay service and a confidentiality protection algorithm identity.

In an embodiment, the first response message further includes validity time information; and
the third generation module is configured to generate, within a validity time indicated by the validity time information, the relay discovery key according to the intermediate key and the algorithm identity.

In an embodiment, the third sending module 310 is further configured to broadcast a relay discovery announcement message which is protected using the relay discovery key.

In an embodiment, the third receiving module is configured to receive a relay discovery request message;
the apparatus further includes a second protection module, configured to decrypt and verify the relay discovery request message using the relay discovery key; and
the third sending module 310 is further configured to, when the relay discovery request message is successfully decrypted and verified, broadcast a relay discovery response message which is protected using the relay discovery key.

As shown in FIG. 17, embodiments of the present disclosure provide an apparatus for processing information, and the apparatus includes:
a fourth receiving module 410, configured to receive a second request message sent by a first network element;
a fifth determination module 420, configured to determine, according to the first request message, whether a potential UE-to-Network (U2N) relay is available for providing a required relay service for a remote UE, and obtain a determination result; and
a fourth sending module 430, configured to return a second response message to the first network element according to the determination result.

The apparatus for processing the information may be included in the proximity based service.

In an embodiment, the fourth receiving module 410, the fifth determination module 420 and the fourth sending module 430 may be program modules; after the program modules are performed by a processor, the above operations can be implemented.

In another embodiment, the fourth receiving module 410, the fifth determination module 420 and the fourth sending module 430 may be modules in which software and hardware are combined. The modules in which software and hardware are combined include but are not limited to programmable arrays, which include but are not limited to field programmable arrays and/or complex programmable arrays.

In some other embodiments, the fourth receiving module 410, the fifth determination module 420 and the fourth sending module 430 may be pure hardware modules, and the pure hardware modules include but are not limited to dedicated integrated circuits.

In an embodiment, the second request message includes: a RSC of a relay service required by the remote UE, an identity of the remote UE and an identity of the potential U2N relay.

Embodiments of the present disclosure provide a communication device, including:
a memory configured to store executable instructions of a processor; and
a processor, connected to the memory,
the processor is configured to perform the method for processing the information provided by any of the aforementioned technical solutions.

The processor may include various types of storage mediums, which are non-transitory computer storage mediums that can continue to remember information stored thereon after the communication device loses power.

Here, the communication device includes the aforementioned remote UE, U2N relay or the first network element and/or the second network element.

The processor can be connected to the memory via a bus, etc., and is configured to read the executable program stored in the memory, for example, at least one of the methods shown in FIGS. 2 to 13.

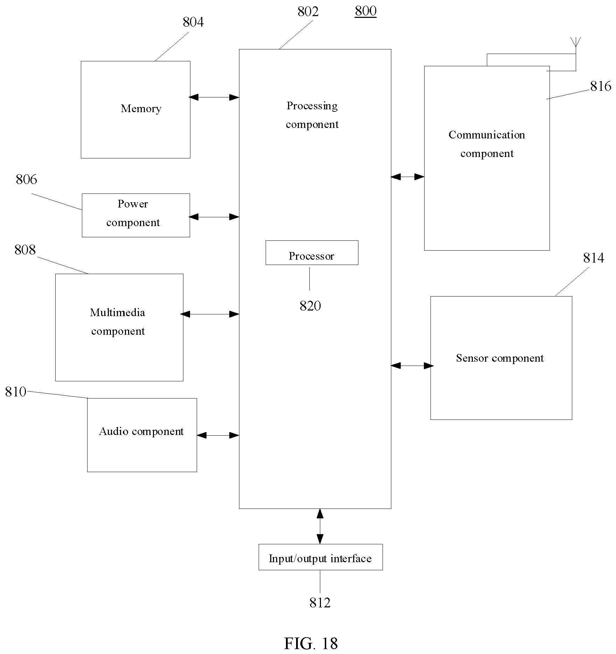

FIG. 18 shows a block diagram of a UE 800 according to an embodiment of the present disclosure. For example, the UE 800 may be a mobile phone, a computer, a digital broadcast terminal, a messaging device, a gaming console, a tablet device, a medical device, an exercise device, a personal digital assistant, etc.

Referring to FIG. 18, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide state assessments of various aspects of the UE 800. For instance, the sensor component 814 may detect an open/closed state of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 may access a wireless network based on a communication standard, such as WiFi, 2G, or 3G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the UE 800 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 804 including instructions, the above instructions may be executed by the processor 820 in the UE 800 for generating the above-described methods. For example, the non-transitory computer-readable storage medium may be a ROM, a Random Access Memory (RAM), a CD-ROM, a magnetic tape, a floppy disc, an optical data storage device, and the like.

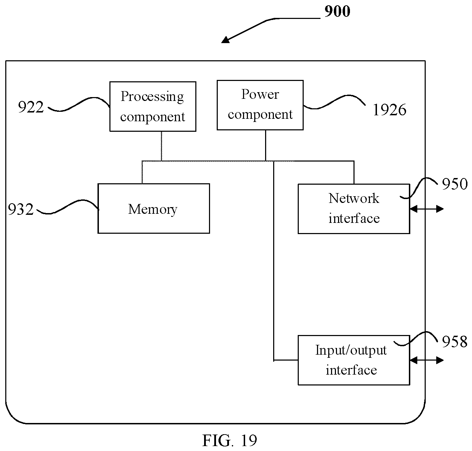

As shown in FIG. 19, an embodiment of the present disclosure provides a structure of an access device. For example, a communication device 900 may be provided as a network side device. The communication device may be various network elements such as the aforementioned access network element and/or network function.

Referring to FIG. 19, the communication device 900 includes a processing component 922, which further includes one or more processors and a memory resource represented by a memory 932 for storing instructions executable by the processing component 922, such as an application program. The application program stored in the memory 932 may include one or more modules, each corresponding to a set of instructions. In addition, the processing component 922 is configured to execute the instructions to execute the aforementioned any method applied on the access network device, for example, at least one of the methods shown in FIGS. 4 to 9.

The communication device 900 may further include: a power component 926 configured to perform power management of the communication device 900, a wired or wireless network interface 950 configured to connect the communication device 900 to the network, and an input/output (I/O) interface 958. The communication device 900 may operate an operating system stored in the memory 932, such as Windows Server TM, Mac OS XTM, UnixTM, LinuxTM, FreeBSDTM, or the like.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for processing information, performed by a first network element, and comprising:
receiving a first request message sent by a User Equipment (UE);
wherein the first request message is configured to request an intermediate key from the first network element, the intermediate key is configured to determine a relay discovery key, and the relay discovery key is configured for security protection of mutual discovery between a UE-to-Network (U2N) relay and a remote UE.

2. The method according to claim 1, wherein the method further comprises:
sending, according to the first request message, a first response message comprising the intermediate key to the UE.

3. The method according to claim 2, wherein the method further comprises:
determining whether the UE is authorized to obtain the intermediate key;
sending, according to the first request message, the first response message comprising the intermediate key to the UE comprises:
when the UE is authorized to obtain the intermediate key, sending, according to the first request message, the first response message comprising the intermediate key to the UE.

4. The method according to claim 3, wherein determining whether the UE is authorized to obtain the intermediate key comprises:
when the UE is the U2N relay, determining whether the U2N relay is authorized to provide a relay service; or,
when the UE is the remote UE, determining whether the remote UE is authorized to obtain the relay service.

5. The method according to claim 3 or 4, wherein the first request message comprises an identity of the UE and a Relay Service Code (RSC); and
determining whether the UE is authorized to obtain the intermediate key comprises:
sending a query request to a second network element, wherein the query request at least comprises the identity of the UE;
receiving a query result returned based on the query request; and
determining, according to the query result, whether the UE is authorized to obtain the relay service.

6. The method according to any one of claims 1 to 5, wherein the first request message at least comprises a Relay Service Code (RSC);
the method further comprises:
generating the intermediate key according to the RSC.

7. The method according to any one of claims 2 to 6, wherein the first request message further comprises security capability information indicating a security capability of the UE;
the method further comprises:
when the UE is the U2N relay, determining, according to the security capability information of the U2N relay, a security algorithm for the U2N relay to provide relay service discovery, wherein an algorithm of the security algorithm is carried in the first response message and returned to the U2N relay.

8. The method according to any one of claims 1 to 6, wherein the first request message further comprises: a RSC and security capability information indicating a security capability of the UE;
the method further comprises:
when the UE is the remote UE, determining a potential U2N relay that provides the remote UE with a relay service identified by the RSC; and
determining, according to the security capability information of the remote UE, whether a security algorithm supported by the remote UE is comprised in a security algorithm used by the potential U2N relay to provide relay service discovery; and
sending, according to the first request message, the first response message comprising the intermediate key to the UE comprises:
when the security algorithm supported by the remote UE is comprised in the security algorithm used by the potential U2N relay to provide the relay service discovery, sending, according to the first request message, the first response message to the remote UE, wherein the first response message comprises the intermediate key and an algorithm identity of the security algorithm used by the potential U2N relay to provide the relay service discovery.

9. The method according to claim 8, wherein determining, according to the RSC of the remote UE, the potential U2N relay that provides the remote UE with the relay service comprises:
sending, according to the RSC of the remote UE, a second request message to a proximity based service, wherein the second request message comprises the RSC of the remote UE;
receiving a second response message returned by the second request message; and
determining, according to the second response message, the potential U2N relay that provides the remote UE with the relay service.

10. The method according to any one of claims 2 to 9, wherein the first response message further comprises:
validity time information configured to determine a validity time of the intermediate key.

11. A method for processing information, performed by a remote User Equipment (UE), and comprising:
sending a first request message to a first network element, wherein the first request message is configured to request an intermediate key from the first network element, the intermediate key is configured to determine a relay discovery key, and the relay discovery key is configured for security protection of mutual discovery between a UE-to-Network (U2N) relay and the remote UE.

12. The method according to claim 11, wherein the first request message comprises an identity of the remote UE and a Relay Service Code (RSC), and the identity of the remote UE and the RSC are used by the first network element to determine whether the remote UE is authorized to obtain a relay service identified by the RSC;
the method further comprises:
receiving a first response message returned based on the first request message, wherein the first response message comprising the intermediate key is returned in a case where it is determined by the first network element that the remote UE is authorized to obtain the relay service identified by the RSC.

13. The method according to claim 12, wherein the first request message further comprises security capability information indicating a security capability of the remote UE; and
wherein the first response message comprising the intermediate key and an algorithm identity is returned in a case where a security algorithm supported by the remote UE is comprised in a security algorithm for a potential U2N relay to provide relay service discovery, and the algorithm identity indicates the security algorithm for the potential U2N relay to provide the relay service discovery.

14. The method according to claim 13, wherein the method further comprises:
generating the relay discovery key according to the intermediate key and the algorithm identity; and
protecting, according to the relay discovery key, discovery of the potential U2N relay providing the relay service.

15. The method according to claim 14, wherein generating the relay discovery key according to the intermediate key and the algorithm identity comprises:
generating an integrity protection relay discovery key according to the intermediate key, a first parameter value, and an integrity protection algorithm identity; and
generating a confidentiality protection relay discovery key according to the intermediate key, a second parameter value, and a confidentiality protection algorithm identity;
wherein the second parameter value and the first parameter value are different parameter values of the same input parameter of a key generation function.

16. The method according to claim 14, wherein generating the relay discovery key according to the intermediate key and the algorithm identity comprises:
generating an integrity protection relay discovery key according to the intermediate key, a first parameter value, a RSC of a relay service and an integrity protection algorithm identity; and
generating a confidentiality protection relay discovery key according to the intermediate key, a second parameter value, the RSC of the relay service and a confidentiality protection algorithm identity.

17. The method according to claim 14, wherein the first response message further comprises validity time information; and
generating the relay discovery key according to the intermediate key and the algorithm identity comprises:
generating, within a validity time indicated by the validity time information, the relay discovery key according to the intermediate key and the algorithm identity.

18. The method according to claim 14, wherein protecting, according to the relay discovery key, the discovery of the potential U2N relay providing the relay service comprises:
receiving a broadcast relay discovery announcement message;
decrypting and verifying the relay discovery announcement message according to the relay discovery key; and
when the relay discovery announcement message is successfully decrypted and verified, determining the potential U2N relay as a U2N relay that provides the remote UE with the relay service.

19. The method according to claim 18, wherein the method further comprises:
broadcasting a relay discovery request message which is encrypted and integrity protected using the relay discovery key;
receiving a relay discovery response message which is broadcast by the potential U2N relay after successfully decrypting and verifying the relay discovery request message; and
when the relay discovery response message is successfully decrypted and verified, determining the potential U2N relay as the U2N relay that provides the remote UE with the relay service.

20. A method for processing information, performed by a UE-to-Network (U2N) relay, and comprising:
sending a first request message to a first network element, wherein the first request message is configured to request an intermediate key from the first network element, the intermediate key is configured to determine a relay discovery key, and the relay discovery key is configured for security protection of mutual discovery between the U2N relay and a remote UE.

21. The method according to claim 20, wherein the first request message comprises an identity of the U2N relay and a Relay Service Code (RSC), and the identity of the U2N relay and the RSC are used by the first network element to determine whether the U2N relay is authorized to provide a relay service identified by the RSC;
the method further comprises:
receiving a first response message returned based on the first request message, wherein the first response message comprising the intermediate key is returned in a case where it is determined by the first network element that the U2N relay is authorized to obtain the relay service identified by the RSC.

22. The method according to claim 21, wherein the first request message further comprises security capability information indicating a security capability of the U2N relay, the security capability information is used by the first network element to select a security algorithm for the U2N relay to provide relay service discovery, and an algorithm identity of the security algorithm selected by the first network element for the U2N relay to provide the relay service discovery is carried in the first response message.

23. The method according to claim 22, wherein the method further comprises:
generating the relay discovery key according to the intermediate key and the algorithm identity.

24. The method according to claim 23, wherein generating the relay discovery key according to the intermediate key and the algorithm identity comprises:
generating an integrity protection relay discovery key according to the intermediate key, a first parameter value, and an integrity protection algorithm identity; and
generating a confidentiality protection relay discovery key according to the intermediate key, a second parameter value, and a confidentiality protection algorithm identity;
wherein the second parameter value and the first parameter value are different parameter values of the same input parameter of a key generation algorithm.

25. The method according to claim 23, wherein generating the relay discovery key according to the intermediate key and the algorithm identity comprises:
generating an integrity protection relay discovery key according to the intermediate key, a first parameter value, a RSC of a relay service and an integrity protection algorithm identity; and
generating a confidentiality protection relay discovery key according to the intermediate key, a second parameter value, the RSC of the relay service and a confidentiality protection algorithm identity.

26. The method according to claim 23, wherein the first response message further comprises validity time information; and
generating the relay discovery key according to the intermediate key and the algorithm identity comprises:
generating, within a validity time indicated by the validity time information, the relay discovery key according to the intermediate key and the algorithm identity.

27. The method according to claim 23, wherein the method further comprises:
broadcasting a relay discovery announcement message which is protected using the relay discovery key.

28. The method according to claim 23, wherein the method further comprises:
receiving a relay discovery request message;
decrypting and verifying the relay discovery request message using the relay discovery key; and
when the relay discovery request message is successfully decrypted and verified, broadcasting a relay discovery response message which is protected using the relay discovery key.

29. A method for processing information, performed by a proximity based service, and comprising:
receiving a second request message sent by a first network element;
determining, according to the first request message, whether a potential UE-to-Network (U2N) relay is available for providing a required relay service for a remote UE, and obtaining a determination result; and
returning a second response message to the first network element according to the determination result.

30. The method according to claim 29, wherein the second request message comprises: a RSC of a relay service required by the remote UE, an identity of the remote UE and an identity of the potential U2N relay.

31. An apparatus for processing information, comprising:
a first receiving module, configured to receive a first request message sent by a User Equipment (UE);
wherein the first request message is configured to request an intermediate key from the first network element, the intermediate key is configured to determine a relay discovery key, and the relay discovery key is configured for security protection of mutual discovery between a UE-to-Network (U2N) relay and a remote UE.

32. The apparatus according to claim 31, wherein the apparatus further comprises:
a first sending module, configured to send, according to the first request message, a first response message comprising the intermediate key to the UE.

33. The apparatus according to claim 32, wherein the apparatus further comprises:
a first determination module, configured to determine whether the UE is authorized to obtain the intermediate key; and
wherein the first sending module is configured to, when the UE is authorized to obtain the intermediate key, send, according to the first request message, the first response message comprising the intermediate key to the UE.

34. The apparatus according to claim 33, wherein the first determination module is configured to, when the UE is the U2N relay, determine whether the U2N relay is authorized to provide a relay service; or, when the UE is the remote UE, determine whether the remote UE is authorized to obtain the relay service.

35. The apparatus according to claim 33 or 34, wherein the first request message comprises an identity of the UE and a Relay Service Code (RSC); and
the first determination module is configured to send a query request to a second network element, wherein the query request at least comprises the identity of the UE; receive a query result returned based on the query request; and determine, according to the query result, whether the UE is authorized to obtain the relay service.

36. The apparatus according to any one of claims 31 to 35, wherein the first request message at least comprises a Relay Service Code (RSC);
the apparatus further comprises:
a first generation module, configured to generate the intermediate key according to the RSC.

37. The apparatus according to any one of claims 32 to 36, wherein the first request message further comprises security capability information indicating a security capability of the UE;
the apparatus further comprises:
a second determination module, configured to, when the UE is the U2N relay, determine, according to the security capability information of the U2N relay, a security algorithm for the U2N relay to provide relay service discovery, wherein an algorithm of the security algorithm is carried in the first response message and returned to the U2N relay.

38. The apparatus according to any one of claims 31 to 36, wherein the first request message further comprises: a RSC and security capability information indicating a security capability of the UE;
the apparatus further comprises:
a third determination module, configured to, when the UE is the remote UE, determining a potential U2N relay that provides the remote UE with a relay service identified by the RSC; and determine, according to the security capability information of the remote UE, whether a security algorithm supported by the remote UE is comprised in a security algorithm used by the potential U2N relay to provide relay service discovery; and
the first sending module is configured to, when the security algorithm supported by the remote UE is comprised in the security algorithm used by the potential U2N relay to provide the relay service discovery, send, according to the first request message, the first response message to the remote UE, wherein the first response message comprises the intermediate key and an algorithm identity of the security algorithm used by the potential U2N relay to provide the relay service discovery.

39. The apparatus according to claim 38, wherein the third determination module is configured to send, according to the RSC of the remote UE, a second request message to a proximity based service, wherein the second request message comprises the RSC of the remote UE; receive a second response message returned by the second request message; and determine, according to the second response message, the potential U2N relay that provides the remote UE with the relay service.

40. The apparatus according to any one of claims 32 to 39, wherein the first response message further comprises validity time information configured to determine a validity time of the intermediate key.

41. An apparatus for processing information, comprising:
a second sending module, configured to send a first request message to a first network element, wherein the first request message is configured to request an intermediate key from the first network element, the intermediate key is configured to determine a relay discovery key, and the relay discovery key is configured for security protection of mutual discovery between a UE-to-Network (U2N) relay and the remote UE.

42. The apparatus according to claim 41, wherein the first request message comprises an identity of the remote UE and a Relay Service Code (RSC), and the identity of the remote UE and the RSC are used by the first network element to determine whether the remote UE is authorized to obtain a relay service identified by the RSC;
the apparatus further comprises:
a second receiving module is configured to receive a first response message returned based on the first request message, wherein the first response message comprising the intermediate key is returned in a case where it is determined by the first network element that the remote UE is authorized to obtain the relay service identified by the RSC.

43. The apparatus according to claim 42, wherein the first request message further comprises security capability information indicating a security capability of the remote UE; and
wherein the first response message comprising the intermediate key and an algorithm identity is returned in a case where a security algorithm supported by the remote UE is comprised in a security algorithm for a potential U2N relay to provide relay service discovery, and the algorithm identity indicates the security algorithm for the potential U2N relay to provide the relay service discovery.

44. The apparatus according to claim 43, wherein the apparatus further comprises:
a second generation module, configured to generate the relay discovery key according to the intermediate key and the algorithm identity; and
a first protection module, configured to protect, according to the relay discovery key, discovery of the potential U2N relay providing the relay service.

45. The apparatus according to claim 44, wherein the second generation module is configured to generate an integrity protection relay discovery key according to the intermediate key, a first parameter value, and an integrity protection algorithm identity; and generate a confidentiality protection relay discovery key according to the intermediate key, a second parameter value, and a confidentiality protection algorithm identity; wherein the second parameter value and the first parameter value are different parameter values of the same input parameter of a key generation function.

46. The apparatus according to claim 44, wherein the second generation module is configured to generate an integrity protection relay discovery key according to the intermediate key, a first parameter value, a RSC of a relay service and an integrity protection algorithm identity; and generate a confidentiality protection relay discovery key according to the intermediate key, a second parameter value, the RSC of the relay service and a confidentiality protection algorithm identity.

47. The apparatus according to claim 44, wherein the first response message further comprises validity time information; and
the second generation module is configured to generate, within a validity time indicated by the validity time information, the relay discovery key according to the intermediate key and the algorithm identity.

48. The apparatus according to claim 44, wherein the first protection module is configured to receive a broadcast relay discovery announcement message; decrypt and verify the relay discovery announcement message according to the relay discovery key; and when the relay discovery announcement message is successfully decrypted and verified, determine the potential U2N relay as a U2N relay that provides the remote UE with the relay service.

49. The apparatus according to claim 48, wherein the second sending module is further configured to broadcast a relay discovery request message which is encrypted and integrity protected using the relay discovery key;
the second receiving module is further configured to receive a relay discovery response message which is broadcast by the potential U2N relay after successfully decrypting and verifying the relay discovery request message; and
the apparatus further comprises:
a fourth determination module, configured to, when the relay discovery response message is successfully decrypted and verified, determine the potential U2N relay as the U2N relay that provides the remote UE with the relay service.

50. An apparatus for processing information, comprising:
a third sending module, configured to send a first request message to a first network element, wherein the first request message is configured to request an intermediate key from the first network element, the intermediate key is configured to determine a relay discovery key, and the relay discovery key is configured for security protection of mutual discovery between the U2N relay and a remote UE.

51. The apparatus according to claim 50, wherein the first request message comprises an identity of the U2N relay and a Relay Service Code (RSC), and the identity of the U2N relay and the RSC are used by the first network element to determine whether the U2N relay is authorized to provide a relay service identified by the RSC;
the apparatus further comprises:
a third receiving module, configured to receive a first response message returned based on the first request message, wherein the first response message comprising the intermediate key is returned in a case where it is determined by the first network element that the U2N relay is authorized to obtain the relay service identified by the RSC.

52. The apparatus according to claim 51, wherein the first request message further comprises security capability information indicating a security capability of the U2N relay, the security capability information is used by the first network element to select a security algorithm for the U2N relay to provide relay service discovery, and an algorithm identity of the security algorithm selected by the first network element for the U2N relay to provide the relay service discovery is carried in the first response message.

53. The apparatus according to claim 52, wherein the apparatus further comprises:
a third generation module, configured to generate the relay discovery key according to the intermediate key and the algorithm identity.

54. The apparatus according to claim 53, wherein the third generation module is configured to generate an integrity protection relay discovery key according to the intermediate key, a first parameter value, and an integrity protection algorithm identity; and generate a confidentiality protection relay discovery key according to the intermediate key, a second parameter value, and a confidentiality protection algorithm identity; wherein the second parameter value and the first parameter value are different parameter values of the same input parameter of a key generation algorithm.

55. The apparatus according to claim 53, wherein the third generation module is configured to generate an integrity protection relay discovery key according to the intermediate key, a first parameter value, a RSC of a relay service and an integrity protection algorithm identity; and generate a confidentiality protection relay discovery key according to the intermediate key, a second parameter value, the RSC of the relay service and a confidentiality protection algorithm identity.

56. The apparatus according to claim 53, wherein the first response message further comprises validity time information; and
the third generation module is configured to generate, within a validity time indicated by the validity time information, the relay discovery key according to the intermediate key and the algorithm identity.

57. The apparatus according to claim 53, wherein the third sending module is further configured to broadcast a relay discovery announcement message which is protected using the relay discovery key.

58. The apparatus according to claim 53, wherein the third receiving module is configured to receive a relay discovery request message;
the apparatus further comprises a second protection module, configured to decrypt and verify the relay discovery request message using the relay discovery key; and
the third sending module is further configured to, when the relay discovery request message is successfully decrypted and verified, broadcast a relay discovery response message which is protected using the relay discovery key.

59. An apparatus for processing information, comprising:
a fourth receiving module, configured to receive a second request message sent by a first network element;
a fifth determination module, configured to determine, according to the first request message, whether a potential UE-to-Network (U2N) relay is available for providing a required relay service for a remote UE, and obtain a determination result; and
a fourth sending module, configured to return a second response message to the first network element according to the determination result.

60. The apparatus according to claim 59, wherein the second request message comprises: a RSC of a relay service required by the remote UE, an identity of the remote UE and an identity of the potential U2N relay.

61. A communication device, comprising a processor, a transceiver, a memory, and an executable program stored in the memory and capable of being run by the processor, wherein the processor performs the method according to any one of claims 1 to 10, 11 to 19, 20 to 28 or 29 to 30 when running the executable program.

62. A computer storage medium having an executable program stored thereon, wherein the executable program, when performed by a processor, is capable of implementing the method according to any one of claims 1 to 10, 11 to 19, 20 to 28 or 29 to 30.
